Europäisches Patentamt

European Patent Office

Office européen des brevets

(19)

(11) Veröffentlichungsnummer: **0 358 912 B1**

(12) **EUROPÄISCHE PATENTSCHRIFT**

(45) Veröffentlichungstag der Patentschrift:
08.01.92 Patentblatt 92/02

(51) Int. Cl.⁵ : **C01B 5/00, B01J 23/89**

(21) Anmeldenummer: **89114034.5**

(22) Anmeldetag : **29.07.89**

(54) **Katalysator bestehend aus einem Metallschichtsystem zur Beseitigung von Wasserstoff aus einem Gasgemisch.**

(30) Priorität : **04.08.88 DE 3826503**

(43) Veröffentlichungstag der Anmeldung :
**21.03.90 Patentblatt 90/12**

(45) Bekanntmachung des Hinweises auf die
Patenterteilung :
**08.01.92 Patentblatt 92/02**

(84) Benannte Vertragsstaaten :
**AT BE CH DE ES FR GB GR IT LI LU NL SE**

(56) Entgegenhaltungen :
**EP-A- 0 233 564**
**EP-A- 0 301 536**

(73) Patentinhaber : **Forschungszentrum Jülich
GmbH
Postfach 1913
W-5170 Jülich (DE)**
Patentinhaber : **Gesellschaft für
Reaktorsicherheit (GRS) mbH
Schwertnergasse 1
W-5000 Köln 1 (DE)**

(72) Erfinder : **Chakraborty, Amiya K., Dr.
Tannenweg 9a
W-5042 Erftstadt (DE)**
Erfinder : **Kersting, Edmund
Liegnitzer Strasse 8
W-5063 Overath (DE)**
Erfinder : **Rohde, Jürgen
Wilhemshöhe 11
W-5060 Bergisch-Gladbach 2 (DE)**
Erfinder : **Klatt, Karl-Heinz
Wendelinusstrasse 64
W-5170 Jülich (DE)**
Erfinder : **Wenzl, Helmut, Prof. Dr.
Nordstrasse 8
W-5170 Jülich (DE)**
Erfinder : **Konrad, Ralf
Berliner Strasse 10
W-6349 Sinn (DE)**

## Beschreibung

Die Erfindung bezieht sich auf ein katalytisch wirkendes Metallschichtsystem zur Beseitigung von Wasserstoff aus einem Gasgemisch, das auch Wasserstoff und Sauerstoff enthält. Das Metallschichtsystem weist eine dem Gasgemisch zugewandte Oberflächenschicht auf, die aus einer PdNiCu-Legierung besteht und die als Katalysator bei Oxidation des Wasserstoffs wirkt. Die Oberflächenschicht ist mit einem Träger aus wärmeleitendem Material verbunden.

Metallschichtsysteme dieser Art sind zur Verhinderung von Detonationen, insbesondere bei Kernreaktorunfällen vorgesehen, bei denen Wasserstoff im Reaktor-Sicherheitsbehälter freigesetzt wird. Es ist bekannt, die Metallschichtsysteme in bei Normalbetrieb geschlossenen Behältnissen in der Reaktoranlage derart unterzubringen, daß sie sich vor und bei Entwicklung eines explosiven Knallgasgemisches öffnen können und die Metallschichtsysteme freigeben, damit diese als Katalysator wirken und den Wasserstoffanteil im explosionsgefährdeten Raum der Reaktoranlage durch Oxidation und Ausbildung von Wasser verringert. Metallschichtsysteme dieser Art sind in DE-A 3604416 und in der älteren EP-A-301536 beschrieben.

Nachteilig ist, daß die Gasatmosphäre insbesondere bei Reaktorunfällen Gasanteile aufweisen kann, die die katalytische Wirkung der PdNiCu-Oberfläche herabsetzen können. Insbesondere Joddämpfe oder schwefel- oder phosphorhaltige Gasanteile sowie Kohlenmonoxid CO führen zur Vergiftung des Katalysators.

Aufgabe der Erfindung ist es, ein die Wasserstoffbeseitigung katalytisch beeinflussendes Metallschichtsystem zu schaffen, dessen katalytische Wirkung auch bei Anwesenheit von CO und aggressiven Gasanteilen, wie Jod, Schwefel, Phosphor, nicht wesentlich beeinflußt wird.

Diese Aufgabe wird bei einem Metallschichtsystem der eingangs genannten Art gemäß der Erfindung durch die in Patentanspruch 1 angegebenen Merkmale gelöst. Die katalytisch wirkende PdNiCu-Oberflächenschicht wird auf eine Zwischenschicht aus Vanadium V, Niob Nb, Tantal Ta, Zirkon Zr oder Titan Ti aufgebracht. In der Zwischenschicht wird Wasserstoff gelöst, der die PdNiCu-Oberflächenschicht durchdringt. Dabei weitet sich unter Ausbildung von Reaktions-und Lösungswärme das Metallgitter. Bei dieser Gitteränderung bleibt zwar die Bindung der Metalle am Trägerblech erhalten, die Oberflächenschicht aus PdNiCu reißt jedoch infolge der sehr unterschiedlichen Ausdehnung der einzelnen Schichten des Metallschichtsystems auf. Dies ist bei Anwesenheit von aggressiven Medien im Gasgemisch sehr vorteilhaft, weil dabei stets frische unverbrauchte Katalysatoroberfläche freigelegt wird, die die Oxidation des Wasserstoffs unabhängig von ggf. durch aggressive Medien vergiftetem Katalysator fördert.

Es ist vorteilhaft, zur Ausbildung des Metallschichtsystems einen Träger einzusetzen, der aus einem Material mit hoher Wärmeleitfähigkeit und Wärmekapazität sowie hohem Wärmeausdehnungskoeffizienten besteht, Patentanspruch 2. Als Materialien sind insbesondere Al oder Al-Legierungen, Cu oder Cu-Legierungen, Ni oder Ni-Legierungen einsetzbar. Solche Materialien dienen nicht nur als Wärmepuffer zur Aufnahme der Lösungs- und Reaktionswärme insbesondere bei Beginn der katalytischen Oxidation, sie unterstützen wegen ihrer hohen Wärmeausdehnung relativ zur Wärmeausdehnung vor allem zu den als Zwischenschicht gewählten Metallen auch das gewünschte Aufreißen der Beschichtung. Bevorzugt wird der Träger aus 100 µm bis 10 mm, bevorzugt 1 mm starkem Material ausgebildet, Patentanspruch 3. Mit einem solchen Träger ist das Metallschichtsystem trotz erheblicher Wärmeentwicklung in der Zwischenschicht durch Wärmeaufnahme und -ableitung im Träger sowie Wärmeabfuhr von der Oberfläche des Metallschichtsystems auf niedriger Temperatur zu halten, insbesondere auf einer Temperatur, die unterhalb der Zündtemperatur des vorhandenen Knallgasgemisches liegt. Das Metallschichtsystem ist auch mechanisch stabil und verformt sich bei Reaktion von Oberflächenschicht und Zwischenschicht mit dem Wasserstoff nicht. Hinsichtlich ihrer hohen Wärmeausdehnung sind als Trägermaterial vor allem Al und Al-Legierungen geeignet.

Zwischenschicht und Oberflächenschicht sind als verhältnismäßig dünne Schichten auf dem Träger aufgebracht. Nach Patentanspruchen 4 und 5 sind die Zwischenschicht 0,1 Nanometer (nm) bis 20 Mikrometer (µm), bevorzugt 200 nm, die Oberflächenschicht 0,1 nm bis 20 µm, bevorzugt 100 nm stark. Solche Schichten lassen sich nicht nur auf Trägerblechen oder -folien, sondern auch auf Netzen oder Stäben, die als Träger verwendet werden, aufdampfen oder aufsputtern.

Bevorzugt weist ein Trägerblech beidseitig eine Vanadium-Zwischenschicht und eine Oberflächenschicht aus PdNiCu auf, Patentanspruch 6. Zweckmäßig ist es, nur auf einer Seite eines als Trägerblech ausgebildeten Trägers eine Zwischenschicht aufzubringen und auf der anderen Seite des Trägerbleches die Oberflächenschicht aus PdNiCu unmittelbar aufzubringen, Patentanspruch 7. Bei einer solchen Ausbildung hat sich ergeben, daß auch unterschiedlich wirksame Katalysatorgifte bei gleichzeitiger Anwesenheit im Gasgemisch beherrschbar sind und sich auf beiden Seiten des Metallschichtsystems unterschiedliche Abscheidungen bilden. Die Metallschichtsysteme lassen sich zur katalytischen Wasserstoffoxidation in jod-, schwefel-, phosphor- und bleihaltigen Gasgemischen einsetzen. Auch die Anwesenheit von Kohlenmonoxid im Gasgemisch behindert die Katalyse nicht.

Die Erfindung und weitere Ausbildungen der Erfindung werden nachfolgend anhand von Ausführungsbeispielen näher erläutert. Querschnitte durch Metallschichtsysteme sind in der Zeichnung schematisch dargestellt. Die Zeichnung zeigt im einzelnen :

Figur 1    beidseitig gleichartige beschichtetes Metallschichtsystem ;
Figur 2    Metallschichtsystem mit unterschiedlicher Beschichtung des Trägers ;
Figur 3    Metallschichtsystem mit dreifacher Beschichtung des Trägers.

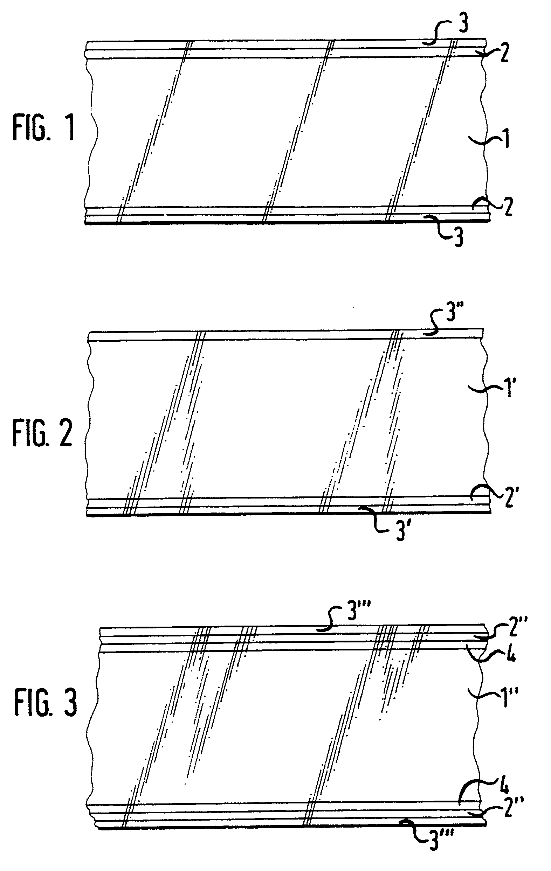

In Figur 1 ist ein Metallschichtsystem mit einem Trägerblech 1 dargestellt, das beidseitig mit einer Zwischenschicht 2 und einer Oberflächenschicht 3 beschichtet ist. Das Trägerblech 1 besteht aus Aluminium, die Zwischenschicht 2 aus Vanadium, die Oberflächenschicht 3 aus PdNiCu. Statt Aluminium lassen sich auch andere wärmeleitfähige Metalle mit im Verhältnis zu den Beschichtungswerkstoffen insbesondere zur Zwischenschicht hohen Wärmeausdehnungskoeffizienten wie Cu oder Ni oder entsprechende Legierungen einsetzen. Für die Zwischenschicht sind statt Vanadium auch Nb, Ta, Zr oder Ti geeignet. Im Ausführungsbeispiel ist die Zwischenschicht 2 auf dem Trägerblech 1, die Oberflächenschicht 3 auf der Zwischenschicht 2 aufgesputtert worden. Das Trägerblech 1 wurde zur Erhöhung der Haftfestigkeit der Beschichtung vor dem Aufbringen der Schichten aufgerauht (beispielsweise durch Sandstrahlen mit anschließender Reinigung), wobei die mittlere Rauhtiefe stärker war als die Dicke der späteren Beschichtung. Im Ausführungsbeispiel betrug die mittlere Rauhtiefe 10 μm. Beim Sputtern oder Aufdampfen der Beschichtung, insbesondere bei ionenunterstütztem Aufdampfen bleibt die Rauhigkeit dann weitgehendst erhalten, so daß sich eine große wirksame Oberflächenschicht bildet.

In Figur 2 ist ein Metallschichtsystem wiedergegeben, dessen Trägerblech 1' auf einer seiner Seiten eine Beschichtung aufweist, wie sie in Figur 1 gezeigt ist, nämlich eine Zwischenschicht 2' aus V und eine Oberflächenschicht 3' aus PdNiCu, auf dessen andere Seite jedoch nur eine PdNiCu-Schicht als Oberflächenschicht 3" ohne Unterschichtung mit V aufgebracht ist. Es hat sich gezeigt, daß bei dieser Ausbildung die Oberflächenschichten 3' und 3" bei Einsatz des Metallschichtsystems zur Wasserstoffbeseitigung in jod-, schwefel- und phosphorhaltigen Gasgemischen unterschiedliche Niederschläge aufweisen : während auf der Oberflächenschicht 3', die auf eine Zwischenschicht aus V aufgesputtert oder aufgedampft ist, im wesentlichen jod- und schwefelhaltige Niederschläge erzeugt werden, weisen die Niederschläge auf der Oberflächenschicht 3" im wesentlichen Phosphor auf.

In Figur 3 ist ein Metallschichtsystem wiedergegeben, bei dem das Trägerblech 1" dreifach beschichtet wurde. Zunächst war auf das Aluminium-Trägerblech PdNiCu aufgetragen worden, Schicht 4, dann eine Zwischenschicht 2" aus V und schließlich die Oberflächenschicht 3" aus PdNiCu. Im Ausführungsbeispiel nach Figur 3 sind alle Schichten beidseitig auf dem Trägerblech aufgesputtert worden. Selbstverständlich ist die Beschichtung aber beispielsweise, wie in Figur 2 gezeigt, auch variierbar. Die Dreifachbeschichtung läßt sich somit mit einer Doppelschicht nach Figur 1 oder auch mit einer einfachen PdNiCu-Schicht wie in Figur 2 kombinieren.

In den Ausführungsbeispielen wurden Metallschichtsysteme mit folgenden Abmessungen eingesetzt :

| | |
|---|---|
| Trägerblech (Al) : | 1 mm |
| Zwischenschicht (V) : | 200 bis 500 nm |
| Oberflächenschicht | |
| (PdNiCu) : | 100 nm |

Die Metallschichtsysteme wurden in Gasatmosphären erprobt, die als aggressive Gase jod-, schwefel- und phosphorhaltige Gasanteile aufwiesen. Die Gasatmosphäre war wie folgt zusammengesetzt : In unter Atmosphärendruck von 1 bar stehende Raumluft wurden 10 Vol% $H_2$, ca. 1 Vol% J und S, ca. 0,05 Vol% Cl und Ph, bis zu 5 Gew% $Cs_2(CO)_3$ sowie bis zu 1 Vol% CO eingeleitet. Durch die katalytische Wirkung der Metallschichtsysteme nahm die Wasserstoffkonzentration im vorgenannten, statisch gehaltenen Gasgemisch von Luft, Wasserstoff und Aerosolen innerhalb eines Zeitintervalls von 4 bis 6 min von 10 Vol% auf 0,1 Vol% ab. Detonationen traten nicht auf.

Mit Zwischenschichten aus Nb, Ta, Ti oder Zr lassen sich vergleichbare Ergebnisse erzielen. Die optimalen Schichtdicken für die Zwischenschichten betragen 1 nm bis 20 μm, bevorzugt 200 nm, insbesondere für V. Die Trägerblechstärke oder die Stärke der Stäbe oder Netzdrähte kann zwischen 100 μm bis zu 1 cm je nach erforderlicher thermischer Qualität (insbesondere notwendiger Wärmekapazität) und Stabilität der Träger gewählt werden. Optimal handhabbar und wirksam sind die Metallschichtsysteme unter Verwendung von Al-Trägerblechen mit 1 mm Dicke.

Als PdNiCu-Oberflächenschicht hat sich eine PdNiCu-Legierung bewährt, die 95 Gew% Pd, 4 Gew% Ni

3

und 1 Gew% Cu enthält. Als untere Grenze für Pd ist in der PdNiCu-Legierung 80 Gew% Pd möglich, für Ni und Cu ergeben sich als maximale Grenzwerte 20 Gew% Ni und 10 Gew% Cu, wobei die Metallgehalte innerhalb der vorgenannten Grenzen entsprechend abzustimmen sind. Die Metallschichtsysteme haben sich auch bei bleihaltigen Gasgemischen bewährt.

In allen Fällen konnten keine oder nur geringe Differenzen bei der Beseitigung des Wasserstoffs mit oben angegebenen Metallschichtsystemen beobachtet werden. Die Grenzen der Schichtdicken werden daher im wesentlichen durch die erforderliche Haftfestigkeit, die Wärmeaufnahme und -ableitung zur Verhinderung einer Temperatursteigerung bis zur Selbstzündung des Gasgemisches sowie insgesamt durch die für den Umsatz notwendige Materialmenge bestimmt.

## Patentansprüche

1. Katalysator bestehend aus einem Metallschichtsystem zur Beseitigung von Wasserstoff aus einem Gasgemisch, das Wasserstoff und Sauerstoff enthält, mit zumindest einer dem Gasgemisch zugewandten Oberflächenschicht aus einer Legierung aus PdNiCu und einem mit der Oberflächenschicht verbundenen Träger aus wärmeleitendem Material, **dadurch gekennzeichnet,** daß zwischen Oberflächenschicht und Träger eine Zwischenschicht aus V, Nb, Ta, Ti oder Zr aufgebracht ist.

2. Metallschichtsystem nach Anspruch 1, **dadurch gekennzeichnet,** daß der Träger aus einem Material mit hoher Wärmeleitfähigkeit und Wärmekapazität sowie hohem Wärmeausdehnungskoeffizienten besteht.

3. **Katalysator** nach Anspruch 2, **dadurch gekennzeichnet,** daß der Träger aus Al, Cu, Ni oder Legierungen dieser Metalle besteht und 100 µm bis 10 mm, bevorzugt 1 mm stark ist.

4. **Katalysator** nach Anspruch 1, 2 oder 3, **dadurch gekennzeichnet,** daß die Zwischenschicht 0,1 nm bis 20 µm, bevorzugt 200 nm stark ist.

5. **Katalysator** nach einem der Ansprüche 1 bis 4, **dadurch gekennzeichnet,** daß die Oberflächenschicht 0,1 nm bis 20 µm, bevorzugt 100 nm stark ist.

6. **Katalysator** nach einem der Ansprüche 1 bis 5, **dadurch gekennzeichnet,** daß als Träger ein Trägerblech beidseitig mit der Zwischenschicht und der Oberflächenschicht beschichtet ist.

7. **Katalysator** nach einem der Ansprüche 1 bis 5, **dadurch gekennzeichnet,** daß als Träger ein Trägerblech auf einer seiner Seiten mit der Zwischenschicht und der Oberflächenschicht beschichtet ist, und daß auf seiner anderen Seite die Oberflächenschicht ohne Zwischenschicht aufgebracht ist.

8. **Katalysator** nach einem der Ansprüche 1 bis 5, **dadurch gekennzeichnet,** daß die Zwischenschicht auf einem mit einer PdNiCu-Schicht beschichtetem Trägerblech aufgebracht ist.

9. **Katalysator** nach einem der vorhergehenden Ansprüche, **dadurch gekennzeichnet,** daß der Träger eine rauhe Oberfläche aufweist.

10. Verwendung des Metallschichtsystems nach einem der Ansprüche 1 bis 8 als Katalysator zur Oxidation von Wasserstoff in einer neben Wasserstoff und Sauerstoff zusätzliche Verunreinigungen, wie Jod, Schwefel, Phosphor enthaltenden Gasatmosphäre.

## Claims

1. A catalyst comprising a metal layer system for the removal of hydrogen from a gas mixture which contains hydrogen and oxygen, with at least one surface layer facing the gas mixture made of an alloy of PdNiCu and a support associated with the surface layer made of heat conductive material, characterised in that an intermediate layer of V, Nb, Ta, Ti or Zr is provided between the surface layer and the support.

2. A metal layer system according to Claim 1, characterised in that the support consists of a material with a higher thermal conductivity and heat capacity and also a higher thermal expansion coefficient.

3. A catalyst according to Claim 2, characterised in that the support consists of Al, Cu, Ni, or alloys of these metals and has a thickness of 100 µm to 10 mm, preferably 1 mm.

4. A catalyst according to Claims 1,2 or 3, characterised in that the intermediate layer has a thickness of 0.1 nm to 20 µm, preferably 200 nm.

5. A catalyst according to any one of Claims 1 to 4, characterised in that the surface layer has a thickness of 0.1 µm to 20 µm, preferably 100 nm.

6. A catalyst according to any one of Claims 1 to 5, characterised in that the support comprises a sheet metal support coated on each side with the intermediate layer and the surface layer.

7. A catalyst according to any one of Claims 1 to 5, characterised in that the support comprises a sheet metal support coated on one of its sides with the intermediate layer and the surface layer, and that the surface layer is applied to its other side without the intermediate layer.

8. A catalyst according to any one of Claims 1 to 5, characterised in that the intermediate layer is applied to a sheet metal support coated with a PdNiCu layer.

9. A catalyst according to any one of the preceding Claims, characterised in that the support has a rough surface.

10. The use of the metal layer system according to any one of Claims 1 to 8 as a catalyst for the oxidation of hydrogen in a gas atmosphere which contains additional impurities, such as iodine, sulphur and phosphorus, in addition to hydrogen and oxygen.

## Revendications

1. Catalyseur constitué d'un système de couches métalliques pour éliminer de l'hydrogène d'un mélange gazeux qui contient de l'hydrogène et de l'oxygène, comprenant au moins une couche superficielle tournée vers le mélange gazeux et en un alliage de PdNiCu et un support en matériau conducteur de la chaleur relié à la couche superficielle, caractérisé, en ce qu'une couche intermédiaire en V, Nb, Ta, Ti ou Zr est déposée entre la couche superficielle et le support.

2. Système de couches métalliques suivant la revendication 1, caractérisé, en ce que le support est en un matériau ayant une grande conductivité thermique et une grande capacité thermique, ainsi qu'un grand coefficient de dilatation thermique.

3. Catalyseur suivant la revendication 2, caractérisé, en ce que le support est en Al, Cu, Ni ou en alliage de ces métaux et a une épaisseur de 100 μm à 10 mm, et de préférence de 1 mm.

4. Catalyseur suivant la revendication 1, 2 ou 3, caractérisé, en ce que la couche intermédiaire a une épaisseur de 0,1 nm à 20 μm et, de préférence, de 200 nm.

5. Catalyseur suivant l'une des revendications 1 à 4, caractérisé, en ce que la couche superficielle a une épaisseur de 0,1 nm à 20 μm et, de préférence de 100 nm.

6. Catalyseur suivant l'une des revendications 1 à 5, caractérisé, en ce que, comme support, une tôle-support est revêtue des deux côtés de la couche intermédiaire et de la couche superficielle.

7. Catalyseur suivant l'une des revendications 1 à 5, caractérisé, en ce que, comme support, une tôle-support est revêtue d'un côté de la couche intermédiaire et de la couche superficielle, et la couche superficielle est déposée de l'autre côté sans couche intermédiaire.

8. Catalyseur suivant l'une des revendications 1 à 5, caractérisé, en ce que la couche intermédiaire est déposée sur une tôle-support revêtue d'une couche de PdNiCu.

9. Catalyseur suivant l'une des revendications précédentes, caractérisé, en ce que le support présente une surface rugueuse.

10. Utilisation du système de couches métalliques suivant l'une des revendications 1 à 8 comme catalyseur, pour oxyder de l'hydrogène dans une atmosphère gazeuse contenant, outre de l'hydrogène et de l'oxygène, des impuretés supplémentaires, comme de l'iode, du soufre et du phosphore.

FIG. 1

FIG. 2

FIG. 3